# EUROPEAN PATENT APPLICATION

(11) **EP 2 644 375 A1**
(43) Date of publication of application: **02.10.2013**
(21) Application number: 12002347.8
(22) Date of filing: 30.03.2012
(51) Int. Cl.: B32B 17/02, B32B 15/20, B32B 5/18, D03D 27/10, B44C 5/04, E04B 1/94

(54) **Composite board**

(71) Applicant: Chen, Chao, Yang, Da'an Dist T'aipei 10665 (TW)
(72) Inventor: Chen, Chao, Yang, Da'an Dist T'aipei 10665 (TW)
(74) Representative: Altenburg, Bernardus Stephanus Franciscus

(57) **Abstract**

A composite board (1) with landscaping and decorative functions is disclosed. The composite board (1) has a first decoration layer (40), a first interlayer (30), and a first protection layer (50). The first interlayer (30) is located under the first decoration layer (40). The first decoration layer (40) is located under the first protection layer (50). The first interlayer (30) is made of 3D fiberglass impregnated with a resin.

## Description

### BACKGROUND OF THE INVENTION

### 1. Field of the Invention

The present invention relates to a composite board; more particularly, the present invention relates to a composite board with a decorative effect, which is made of 3D fiberglass and resin.

### 2. Description of the Related Art

General construction and decoration boards such as planks and marble boards, or general transport boards such as metal sheets, all have great toughness and decorative effect. But those boards have disadvantages such as high expense, heavy weight, and difficulty of use in construction. Therefore, the composite board has been developed for construction and transport. For example, the composite board disclosed in US Pat. No. 4,746,560 includes a reinforced base portion made of a glass mat of the prior art impregnated with a polyester resin for providing toughness. A polyester resin-impregnated graphic print sheet is located above the reinforced base portion for providing a decorative effect. There is a transparent polyester resin overlay located above the polyester resin-impregnated graphic print sheet for protecting the polyester resin-impregnated graphic print sheet, and for allowing the user to see the pattern of the polyester resin-impregnated graphic print sheet via the transparent polyester resin. However, the glass mat of the prior art is brittle, so the toughness of the composite board is insufficient.

Another example is the composite board disclosed in US Pat. No. 4,983,442, which includes a core of fiberglass mattes impregnated with a thermoplastic resin. A strip of semi-rigid urethane foam surrounds the edges of the core. Both the core and the strip have great toughness. There are two reinforced layers located on both surfaces of the core. The reinforced layer is made of fiberglass, allowing the composite board to have improved toughness. A decorative layer is located on the top of the composite board, and a scrim layer is located on the bottom of the composite board, for providing a decorative effect. However, in industry, a strip with the size exactly covering the core is usually made by molding methods. If the manufacturer needs to produce different sizes of the strip for the core, the manufacturer must produce a casting mold of another size for the strip, such that the cost of the composite board will increase.

Therefore, there is a need to provide a light-weight composite board with a decorative function, great toughness, and low cost.

### SUMMARY OF THE INVENTION

It is an object of the present invention to provide a composite board with landscaping, construction and/or decorative functions.

To achieve the abovementioned object, a composite board is disclosed in the present invention in accordance with the appended claims which are incorporated in the description by reference. While in a subclaim a reference may be made to a specific earlier claim, all combinations are intended to be covered in the present application as if they referred to any of the preceding claims.

In the first embodiment of the present invention, the composite board includes a first decoration layer, a first interlayer, and a first protection layer. The first interlayer is located under the first decoration layer. The first interlayer is made of 3D fiberglass impregnated with a resin. The first decoration layer is located under the first protection layer.

In the second embodiment of the present invention, the composite board includes a foundation layer, a first interlayer, a first decoration layer, and a first protection layer. The foundation layer is made of foam or light fireproof material. The first interlayer is made of 3D fiberglass impregnated with a resin. The first interlayer is located above the foundation layer, the first decoration layer is located above the first interlayer, and the first protection layer is located above the first decoration layer.

In the third embodiment of the present invention, the composite board includes a foundation layer, a first interlayer, a first decoration layer, a first protection layer, a second interlayer, a second decoration layer, and a second protection layer. The foundation layer is made of foam light fireproof material. The first interlayer and the second interlayer are made of 3D fiberglass impregnated with a resin. The first interlayer is located above the foundation layer, the first decoration layer is located above the first interlayer, the first protection layer is located above the first decoration layer, the second interlayer is located under the foundation layer, the second decoration layer is located under the second interlayer, and the second protection layer is located under the second decoration layer.

In the fourth embodiment of the present invention, the composite board includes a foundation layer, a first interlayer, a first decoration layer, a first protection layer, and a metal sheet. The foundation layer is made of foam light fireproof material. The first interlayer and the second interlayer are made of 3D fiberglass impregnated with a resin. The metal sheet is located above the foundation layer. The first interlayer is located above the metal sheet. The first decoration layer is located above the first interlayer. The first protection layer is located above the first decoration layer.

### BRIEF DESCRIPTION OF THE DRAWINGS

FIG. 1 illustrates a schematic drawing of the composite board according to the first embodiment of the present invention.
FIG. 2 illustrates an exploded perspective view of the composite board according to the first embodiment of the present invention.
FIG. 3 illustrates a schematic drawing of the composite board according to the second embodiment of the present invention.
FIG. 4 illustrates an exploded perspective view of the composite board according to the second embodiment of the present invention.
FIG. 5 illustrates a schematic drawing of the composite board according to the third embodiment of the present invention.
FIG. 6 illustrates an exploded perspective view of the composite board according to the third embodiment of the present invention.
FIG. 7 illustrates a schematic drawing of the composite board according to the fourth embodiment of the present invention.
FIG. 8 illustrates an exploded perspective view of the composite board according to the fourth embodiment of the present invention.

### DETAILED DESCRIPTION OF THE PREFERRED EMBODIMENT

These and other objects and advantages of the present invention will become apparent from the following description of the accompanying drawings, which discloses several embodiments of the present invention. It is to be understood that the drawings are to be used for purposes of illustration only, and not as a definition of the invention.

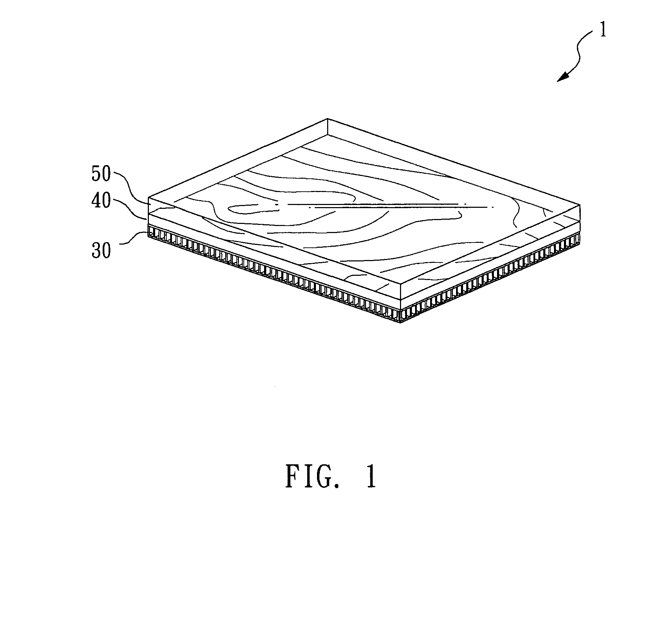

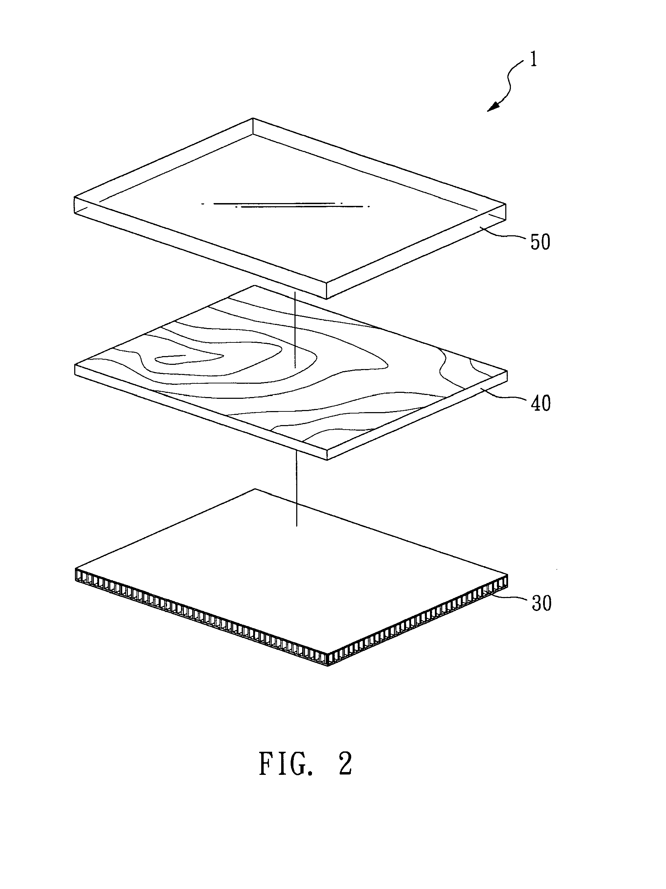

Please refer to FIG. 1 and FIG. 2 for the first embodiment of the present invention. FIG. 1 illustrates a schematic drawing of the composite board according to the first embodiment of the present invention. FIG. 2 illustrates an exploded perspective view of the composite board according to the first embodiment of the present invention.

As shown in FIG. 1 and FIG. 2, in the first embodiment, the composite board 1 of the present invention comprises a first protection layer 50, a first decoration layer 40, and a first interlayer 30.

In the first embodiment, the first decoration layer 40 is a woodprint paper (a printing paper) or a woodprint cloth (a printing cloth), used for providing the decorative effect for the composite board 1. The first decoration layer 40 is located above the first interlayer 30. The first protection layer 50 is made of transparent resin, is located above the first decoration layer 40, and is used for protecting the first decoration layer 40, allowing the user to see the color or pattern of the first decoration layer 40 via the transparent resin of the first protection layer 50. The first interlayer 30 is used for enhancing the toughness of the composite board 1 and is pasted on the first decoration layer 40. The first interlayer 30 is made of 3D fiberglass impregnated with an adhesive; in the present embodiment, the adhesive is a resin. When the 3D fiberglass of the first interlayer 30 absorbs the resin and solidifies, honeycomb structures will be formed in the 3D fiberglass, such that the toughness of the 3D fiberglass is better than the fiberglass of the prior art. However, the adhesive of the present invention is not limited to a resin. In the first embodiment, the thickness is about 0.3cm∼0.7cm, such that the composite board 1 is suitable to replace a thin sheet, such as a tile.

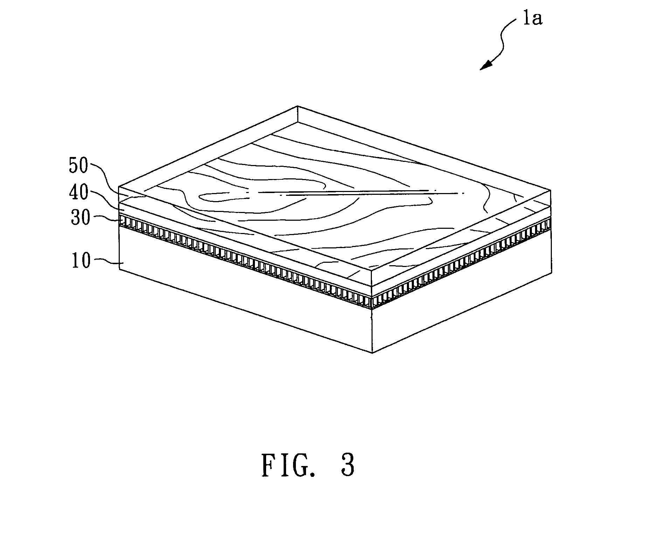

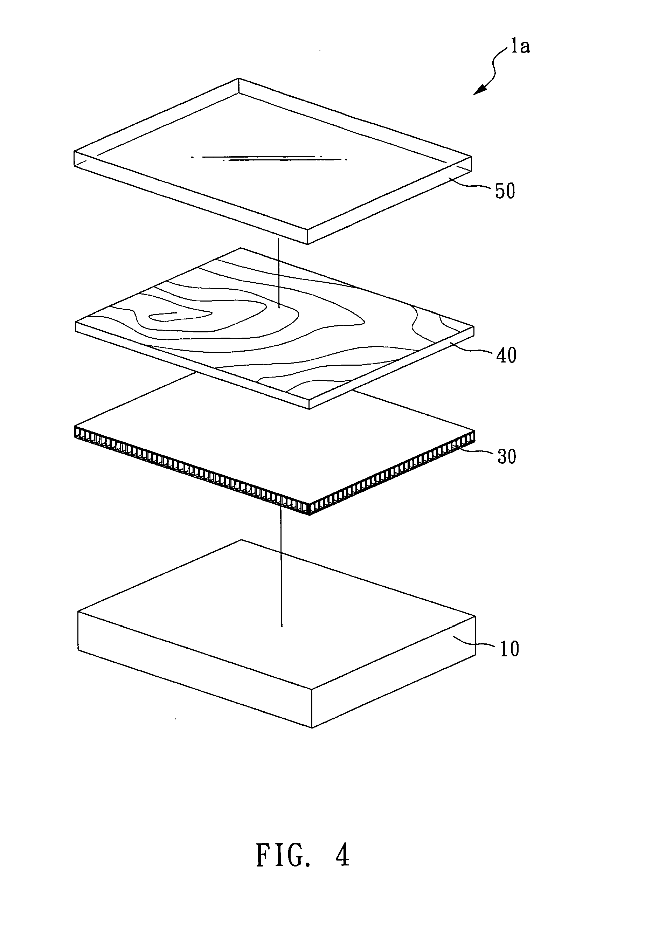

Please refer to FIG. 3 and FIG. 4 for the second embodiment of the present invention. FIG. 3 illustrates a schematic drawing of the composite board according to the second embodiment of the present invention. FIG. 4 illustrates an exploded perspective view of the composite board according to the second embodiment of the present invention.

As shown in FIG. 3 and FIG. 4, the difference between the second embodiment and the first embodiment is that the composite board 1a of the second embodiment further comprises a foundation layer 10 located under the first interlayer 30. The foundation layer 10 is made of foam, such as polyurethane (PU), ethylene-vinyl acetate (EVA), expanded polystyrene (EPS), and polyethylene (PE), or light fireproof material, such as silicon dioxide, Aersio, and artificial pozzolana. The foundation layer 10 is used for enhancing the sound proofing or fireproof effect, and increasing the thickness of the composite board 1a. In the second embodiment, the foundation layer 10 accounts for the greatest part of the thickness of the composite board 1a. The composite board 1a of the second embodiment can be used as a single wall or a single-sided divider.

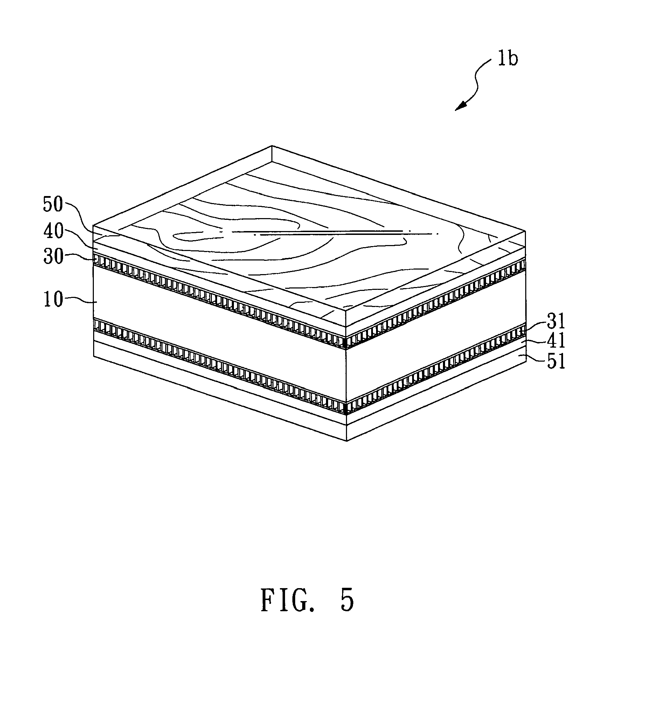

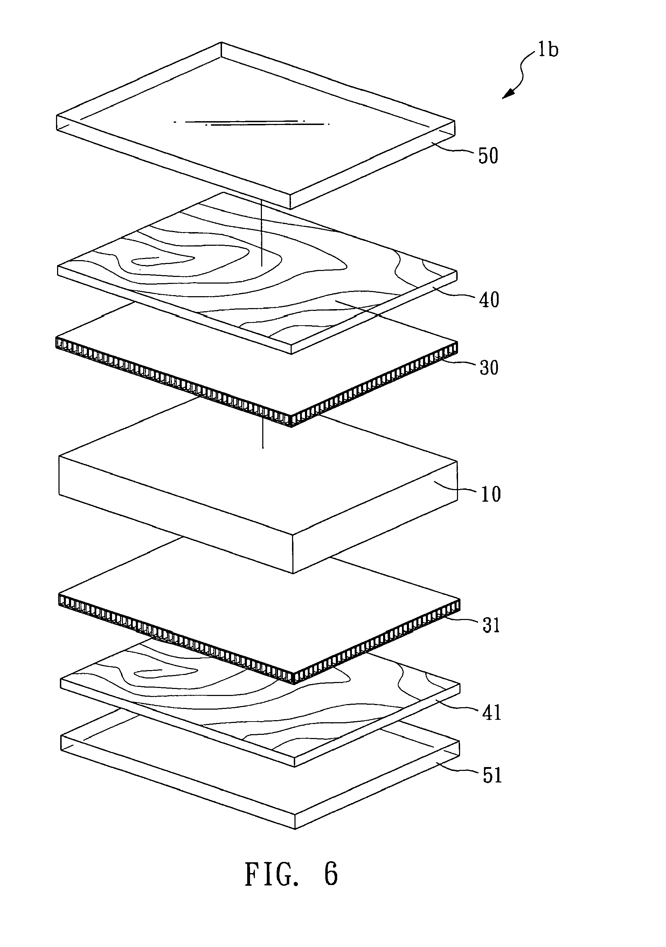

Please refer to FIG. 5 and FIG. 6 for the third embodiment of the present invention. FIG. 5 illustrates a schematic drawing of the composite board according to the third embodiment of the present invention. FIG. 6 illustrates an exploded perspective view of the composite board according to the third embodiment of the present invention.

As shown in FIG. 5 and FIG. 6, the difference between the third embodiment and the second embodiment is that the composite board 1b further comprises a second interlayer 31, a second decoration layer 41, and a second protection layer 51.

The second interlayer 31 is located under the foundation layer 10 and is made of 3D fiberglass impregnated with a resin. The second decoration layer 41 is a woodprint paper (a printing paper) or a woodprint cloth (a printing cloth), used for providing the decorative effect for the composite board 1b. The second decoration layer 41 is located under the second interlayer 31. The second protection layer 51 is made of transparent resin, is located under the second decoration layer 41, and is used for protecting the second decoration layer 41, allowing the user to see the color or pattern of the second decoration layer 41 via the transparent resin of the second protection layer 51. The composite board 1b of the third embodiment, which has a two-sided decorative effect, can be used as a partition wall.

However, the design of the present invention is not limited to the abovementioned embodiments. For example, the first decoration layer 40 and the second decoration layer 41 are not limited to woodprint paper; they can be other kinds of paper, cloth, and plastic sheeting; the decorative appearance can be a stone, marble, or metal texture surface. The material of the first protection layer 50 and the second protection layer 51 are not limited to the transparent resin; they can be other materials which are transparent, are wear resistant, and can be coated on the surface of the first decoration layer 40 and the second decoration layer 41.

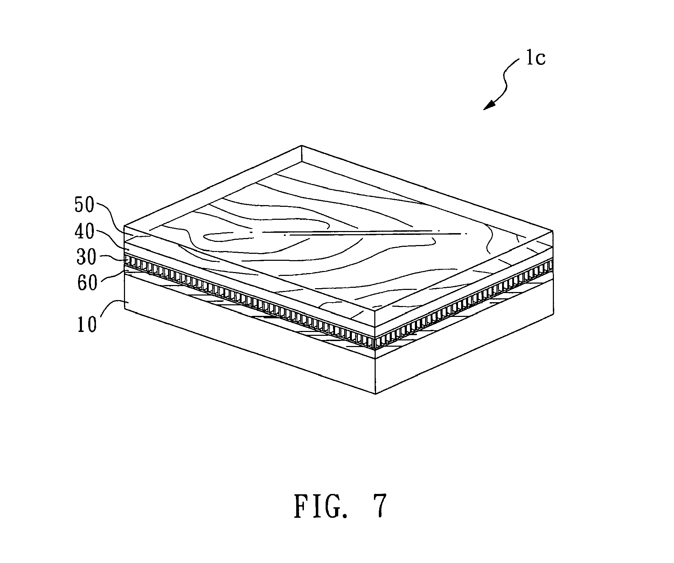

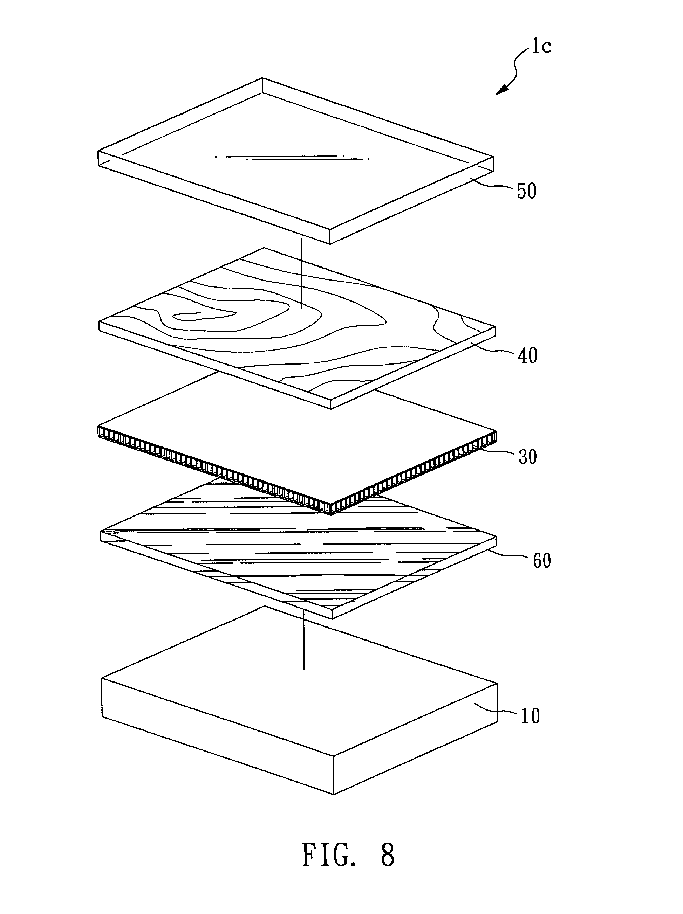

Please refer to Fig. 7 and Fig. 8 for the fourth embodiment of the present invention. FIG. 7 illustrates a schematic drawing of the composite board according to the fourth embodiment of the present invention. FIG. 8 illustrates an exploded perspective view of the composite board according to the fourth embodiment of the present invention.

As shown in Fig. 7 and Fig. 8, the difference between the fourth embodiment and the second embodiment is that the composite board 1c further comprises a metal sheet 60. The metal sheet 60 is located between the foundation layer 10 and the first interlayer 30. The metal sheet 60 is made of aluminum foil which has heat resistance or heat insulation effect, to prevent or delay the foam of the foundation layer 10 of the composite board 1c melts when the temperature is high. The composite board 1c of the fourth embodiment can be used as fireproof building materials.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A composite board (1), comprising:
a first protection layer (50);
a first decoration layer (40) located under the first protection layer (50); and
a first interlayer (30) located under the first decoration layer (40), wherein the first interlayer (30) being made of 3D fiberglass impregnated with an adhesive.

2. The composite board (1) as claimed in Claim 1, further comprising a foundation layer (10) located under the first interlayer (30).

3. The composite board (1) as claimed in Claim 2, wherein the foundation layer (10) is made of foam of light fireproof material.

4. The composite board (1) as claimed in Claim 2 or 3, further comprises a metal sheet (60) located between the foundation layer (10) and the first interlayer (30).

5. The composite board (1) as claimed in Claim 4, wherein the metal sheet (60) is made of aluminum foil.

6. The composite board (1) as claimed in Claim 3, further comprising a second protection layer (51), a second interlayer (31), and a second decoration layer (41), wherein the second interlayer (31) is located under the foundation layer (10), the second decoration layer (41) is located under the second interlayer (31), the second protection layer (51) is located under the second decoration layer (41), the second interlayer (31) being made of 3D fiberglass impregnated with an adhesive.

7. The composite board (1) as claimed in Claim 1, wherein the first protection layer (50) is made of transparent resin.

8. The composite board (1) as claimed in Claim 3, wherein the first protection layer (50) is made of transparent resin.

9. The composite board (1) as claimed in Claim 5, wherein the first protection layer (50) is made of transparent resin.

10. The composite board (1) as claimed in Claim 6, wherein the first protection layer (50) and the second protection layer (51) are made of transparent resin.

11. The composite board (1) as claimed in Claim 7, wherein the first decoration layer (40) is made of paper or cloth.

12. The composite board (1) as claimed in Claim 8, wherein the first decoration layer (40) is made of paper or cloth.

13. The composite board (1) as claimed in Claim 9, wherein the first decoration layer (40) is made of paper or cloth.

14. The composite board (1) as claimed in Claim 10, wherein the first decoration layer (40) and the second decoration layer (41) are made of paper or cloth.

15. A composite board (1), comprising:
a first protection layer (50);
a first decoration layer (40) located under the first protection layer (50);
a first interlayer (30) located under the first decoration layer (40); and
a foundation layer (10) located under the first interlayer (30), wherein the first interlayer (30) being made of 3D fiberglass impregnated with an adhesive.

## Amended claims

### Amended claims in accordance with Rule 137(2) EPC.

**1.** A composite board (1), comprising:
a first protection layer (50);
a first decoration layer (40) located under the first protection layer (50); and
a first interlayer (30) located under the first decoration layer (40), wherein the first interlayer (30) being made of 3D fiberglass impregnated with an adhesive,
the composite board (1) further comprising a foundation layer (10) located under the first interlayer (30), wherein the foundation layer (10) is made of foam or light fireproof material.

**2.** The composite board (1) as claimed in Claim 1, further comprises a metal sheet (60) located between the foundation layer (10) and the first interlayer (30).

**3.** The composite board (1) as claimed in Claim 2, wherein the metal sheet (60) is made of aluminum foil.

**4.** The composite board (1) as claimed in Claim 1, further comprising a second protection layer (51), a second interlayer (31), and a second decoration layer (41), wherein the second interlayer (31) is located under the foundation layer (10), the second decoration layer (41) is located under the second interlayer (31), the second protection layer (51) is located under the second decoration layer (41), the second interlayer (31) being made of 3D fiberglass impregnated with an adhesive.

**5.** The composite board (1) as claimed in Claim 1, wherein the first protection layer (50) is made of transparent resin.

**6.** The composite board (1) as claimed in Claim 1, wherein the first protection layer (50) is made of transparent resin.

**7.** The composite board (1) as claimed in Claim 3, wherein the first protection layer (50) is made of transparent resin.

**8.** The composite board (1) as claimed in Claim 4, wherein the first protection layer (50) and the second protection layer (51) are made of transparent resin.

**9.** The composite board (1) as claimed in Claim 5, wherein the first decoration layer (40) is made of paper or cloth.

**10.** The composite board (1) as claimed in Claim 6, wherein the first decoration layer (40) is made of paper or cloth.

**11.** The composite board (1) as claimed in Claim 7, wherein the first decoration layer (40) is made of paper or cloth.

**12.** The composite board (1) as claimed in Claim 8, wherein the first decoration layer (40) and the second decoration layer (41) are made of paper or cloth.

**13.** A composite board (1), comprising:
a first protection layer (50);
a first decoration layer (40) located under the first protection layer (50);
a first interlayer (30) located under the first decoration layer (40); and
a foundation layer (10) located under the first interlayer (30), wherein the first interlayer (30) being made of 3D fiberglass impregnated with an adhesive.
